# EUROPÄISCHE PATENTSCHRIFT

(11) **EP 1 564 458 B1**
(45) Veröffentlichungstag und Bekanntmachung des Hinweises auf die Patenterteilung: **24.09.2008**
(21) Anmeldenummer: 05001872.0
(22) Anmeldetag: 29.01.2005
(51) Int. Cl.: F16K 11/07, F16J 15/02

(54) **Ventil**
Valve
Soupape

(30) Priorität: 13.02.2004 DE 102004007091
(43) Veröffentlichungstag der Anmeldung: 17.08.2005
(73) Patentinhaber: FESTO AG & Co. KG, 73734 Esslingen (DE)
(72) Erfinder: Räpke, Falk, 73760 Ostfildern (DE); Grzegorz Bogdanowicz, 73760 Ostfildern (DE)
(74) Vertreter: Vogler, Bernd

(56) Entgegenhaltungen:
- DE-B- 1 287 878
- US-A- 2 892 644
- US-A- 3 451 430

## Beschreibung

Die Erfindung betrifft ein Ventil mit einem Ventilgehäuse, das eine zur Aufnahme eines Ventilschiebers vorgesehene, umfangsseitig von einer Gehäusewand begrenzte längliche Gehäuseausnehmung aufweist, in die seitlich mindestens ein Ventilkanal einmündet und in der eine vom Ventilschieber durchsetzte Dichtungseinrichtung angeordnet ist, die ein Dichtungs-Gehäuse besitzt, das wenigstens ein ringförmiges Dichtelement hält, das einen Außenabschnitt mit äußerem Dichtbereich zur Abdichtung gegenüber der Gehäuseausnehmung und einen Innenabschnitt mit innerem Dichtbereich zur Abdichtung gegenüber dem Ventilschieber besitzt.

Ein derartiges Ventil ist beispielsweise aus der DE 41 01 049 C2 bekannt, in der eine Dichtungseinrichtung für ein Mehrwegeventil beschrieben ist, bei der eine Halterungshülse vorgesehen ist, die in eine Aufnahme eingeschoben werden kann und mehrere ringförmige Dichtelemente aufweist, die jeweils sowohl eine innere Dichtkante zur Abdichtung gegenüber dem Ventilschieber und eine äußere Dichtkante zur Abdichtung gegenüber der Gehäuseausnehmung aufweisen.

In der US 2,892,644 ist eine Dichtungsanordnung für ein Kolbenventil offenbart, die kreisförmige, im Querschnitt Y- bzw. I-förmige Dichtelemente besitzt, die zwischen zwei Distanzelementen eingespannt werden und eine Abdichtung einerseits gegenüber der Gehäusewand des Ventilgehäuses sowie andererseits gegenüber dem in der Gehäuseausnehmung des Kolbenventils geführten Kolben bilden.

Aus der DE 30 43 871 ist ein Mehrwegeventil bekannt, mit einem Gehäuse, das eine Gehäuseausnehmung besitzt, in der ein Ventilschieber axial verschieblich gelagert ist. Die als Führungsbohrung bezeichnete Gehäuseausnehmung ist abgestuft, wobei, von der Montageöffnung aus gesehen im Durchmesser kleiner werdende Abschnitte vorgesehen sind. Die jeweiligen Abschnitte der Führungsbohrung sind mit jeweils einer Distanzstück-Dichtring-Kombination, bestehend aus einem Distanzstück und einem ringförmigen Dichtelement bestückbar. Die Dichtelemente dienen sowohl zur Abdichtung gegenüber der Wandung des jeweiligen Führungsbohrungsabschnitts als auch zur Abdichtung gegenüber dem Ventilschieber.

Aus der DE 32 40 552 A1 ist eine Schieberventildichtung bekannt, bei der zur Abdichtung gegenüber dem Ventilschieber und zur Abdichtung gegenüber der Gehäuseausnehmung des Ventilgehäuses jeweils separate Dichtungen verwendet werden. Zur Abdichtung gegenüber der Gehäuseausnehmung wird ein O-Ring verwendet, während die Abdichtung gegenüber dem Ventilschieber über einen abgewinkelten Dichtungsring erfolgt, dessen axial verlaufendes Endteil formschlüssig an einem Distanzring axial verrastet werden kann.

Ein Problem des zuvor geschilderten Standes der Technik ist die Montage der Dichtungseinrichtung bzw. der Dichtungen in der Gehäuseausnehmung des Ventilgehäuses. In die Gehäuseausnehmung münden seitlich mehrere Ventilkanäle ein, die die ansonsten geschlossene und glatte Wandung der Gehäuseausnehmung unterbrechen, wobei die Mündungsränder der Ventilkanalmündungen relativ scharfkantig ausgebildet sein können. Um eine Dichtwirkung gegenüber der Gehäuseausnehmung zu erzielen, muss die Dichtung im Presssitz an der Gehäusewandung anliegen. Bei herkömmlichen Ventilen ist bereits bei der Montage die endgültige, dichtende Radialposition der Dichtungen vorhanden, so dass die Gefahr besteht, dass die Dichtungen beschädigt werden, wenn sie über scharfkantige Ränder der Ventilkanalmündungen geschoben werden. Um diesem Problem abzuhelfen ist es bereits bekannt, Montagehilfen zu verwenden, die den Dichtungen über den Bereich der einmündenden Ventilkanäle hinweghelfen.

Aufgabe der Erfindung ist es ein Ventil der eingangs erwähnten Art zu schaffen, bei dem die Dichteinrichtung einfach, schnell und zuverlässig montierbar ist.

Diese Aufgabe wird durch ein Ventil mit den Merkmalen des unabhängigen Anspruchs 1 gelöst. Weiterbildungen der Erfindung sind in den Unteransprüchen dargestellt.

Das erfindungsgemäße Ventil zeichnet sich dadurch aus, dass das Dichtungs-Gehäuse im Bereich des Dichtelementes zwei das Dichtelement zwischen sich fixierende, ringförmige Gehäuseelemente aufweist, wobei wenigstens eines der Gehäuseelemente an der dem Außenabschnitt axial zugeordneten Seite über wenigstens ein Beaufschlagungsmittel verfügt, das beim Zusammenspannen der Gehäuseelemente lokal den Außenabschnitt derart beaufschlägt, dass der Außenabschnitt zur Erzielung einer Dichtwirkung radial nach außen gegen die Gehäusewand pressbar ist und wobei wenigstens ein Entkopplungsmittel vorgesehen ist, das bewirkt, dass der Innenabschnitt von den aus der Beaufschlagung des Außenabschnittes resultierenden, nach radial innen gerichteten Kräften entkoppelt ist.

Bei Montage der Dichtungseinrichtung ist noch keine Pressung zwischen der Gehäusewand und den Dichtelementen vorhanden, so dass diese "gefahrlos" über scharfkantige Mündungsränder einmündender Ventilkanäle hinweg gelangen können. Zusätzliche Montagehilfen sind hierfür nicht notwendig. Die Dichtwirkung entfaltet sich vorzugsweise erst dann, wenn das betreffende Dichtelement seine zuvor bestimmte Axialposition entlang der Gehäuseausnehmung erreicht hat und die beiden, das betreffende Dichtelement flankierenden Gehäuseelemente zusammengespannt werden, wobei der Außenabschnitt des Dichtelements radial nach außen gegen die Gehäusewand gepresst wird.

Das oder die Entkopplungsmittel bewirken zusätzlich zur "Kraft-Entkopplung", dass eine Fertigungstoleranz am äußeren Dichtbereich des Außenabschnitts keinen Einfluss auf den inneren Dichtbereich hat. Es kann also verhindert werden, dass für die Abdichtung gegenüber der Gehäuseausnehmung, die auch als statische Abdichtung mit statischer Dichtkante bezeichnet werden kann, erforderlichen Radialkräfte und/oder Toleranzen nicht auf den Innenabschnitt des Dichtelements übertragen werden, so dass die Abdichtung gegenüber dem Ventilschieber - auch als dynamische Abdichtung mit dynamischer Dichtkante bezeichnet - davon im Wesentlichen unbeeinflusst ist. Es wird also insbesondere das Problem vermieden, dass der innere Dichtbereich bei Beaufschlagung des Außenabschnitts auf den Ventilschieber drückt, was zu einer erhöhten Reibung zwischen Ventilschieber und Dichtelement führen würde, wobei die erhöhte Reibung zu einer Fehlfunktion beim Schalten des Ventils führen könnte.

Der Außenabschnitt des Dichtelements besitzt eine den äußeren Dichtbereich enthaltende Außenabschnitts-Radialebene und der Innenabschnitt eine den inneren Dichtbereich enthaltende Innenabschnitts-Radialebene. Vorzugsweise ist als Entkopplungsmittel ein zwischen dem Außenabschnitt und Innenabschnitt befindlicher, einerseits mit dem Außenabschnitt und andererseits mit dem Innenabschnitt verbundener, quer zum Außen- und zum Innenabschnitt ausgerichteter Übergangsabschnitt vorgesehen, der bewirkt, dass die Außenabschnitts-Radialebene axial versetzt zur Innenabschnitts-Radialebene angeordnet ist. Das Dichtelement kann also eine abgewinkelte bzw. abgestufte Gestalt aufweisen. Vorzugsweise ist der Übergangsabschnitt im wesentlich senkrecht bzw. im ca. 90° Winkel zum Außen- und zum Innenabschnitt ausgerichtet. Außen- und Innenabschnitt können also im montierten Zustand der Dichtungseinrichtung in radialer Richtung ausgerichtet sein, während der Übergangsabschnitt im wesentlichen in axialer Richtung verläuft.

Die Gehäuseelemente können an die Form des Dichtelements angepasst sein, beispielsweise können sie Gehäuse-Übergangsabschnitte besitzen, die im montierten Zustand der Dichtungseinrichtung korrespondierend zum Übergangsabschnitt des Dichtelements ausgebildet sind. Die Gehäuseelemente können also ebenfalls abgewinkelt bzw. abgestuft ausgebildet sein.

Radial zwischen dem Übergangsabschnitt des Dichtelements und dem den Übergangsabschnitt radial innen flankierenden Gehäuse-Übergangsabschnitt insbesondere des die Beaufschlagung des Außenabschnitts bewirkenden Gehäuseelements ist im montierten Zustand der Dichtungseinrichtung ein Freiraum bzw. Spalt ausgebildet. Dies hat den Vorteil, dass sich der Außenabschnitt bei Beaufschlagung durch das oder die Beaufschlagungsmittel am Gehäuseelement radial in beide Richtungen, also sowohl nach radial innen als nach radial außen verformen kann, wobei sich die Verformung nach innen infolge des Entkopplungsmittels nicht auf den Außenabschnitt überträgt.

Besonders bevorzugt sind Außenabschnitt, Übergangsabschnitt und Innenabschnitt einstückig miteinander verbunden. Sie können also durch einen einzigen Herstellungsprozess hergestellt werden. In bevorzugter Weise sind Außenabschnitt, Übergangsabschnitt und Innenabschnitt aus demselben Material hergestellt, insbesondere aus Elastomermaterial. Es ist möglich ein solches Dichtelement durch ein Elastomer-Spritzverfahren herzustellen. Vorzugsweise wird thermoplastisches Elastomer verwendet. Es sind jedoch auch andere Elastormerarten einsetzbar.

Bei einer Weiterbildung der Erfindung besitzt die Dichteinrichtung wenigstens ein erstes Gehäuseelement, das mittels Haltemitteln insbesondere formschlüssig mit dem Dichtelement verbunden ist und weist wenigstens ein zweites Gehäuseelement auf, das über das wenigstens eine Beaufschlagungsmittel zur Beaufschlagung des Außenabschnitts des Dichtelements verfügt.

Vorzugsweise ist das Beaufschlagungsmittel einstückig mit dem zweiten Gehäuseelement verbunden. Prinzipiell wäre es jedoch auch möglich das Beaufschlagungsmittel als separates Bauteil auszubilden und am betreffenden Gehäuseelement zu befestigen. In bevorzugter Weise ist als Beaufschlagungsmittel ein ringförmiger Wulst vorgesehen, der von der dem Außenabschnitt des Dichtelements zugeordneten Seite des zweiten Gehäuseelements axial hervorsteht. Beim Zusammenspannen der Gehäuseelemente kann sich der Wulst in den Außenabschnitt "eingraben", so dass dieser radial nach außen auf die Gehäusewand gepresst wird. Der Wulst ist vorzugsweise aus einem im Vergleich zum Außenabschnitt härteren Material hergestellt, so dass die Beaufschlagung des Außenabschnitts eine Verformung des Außenabschnitts und nicht eine Verformung des Wulstes ergibt.

Die Haltemittel, über die das erste Gehäuseelement und das Dichtelement insbesondere formschlüssig miteinander verbunden werden können, sind vorzugsweise an das Dichtelement angeformt. Sie können also einen Teil des Dichtelements bilden. Alternativ wäre es möglich die Haltemittel am Gehäuseelement vorzusehen. In bevorzugter Weise wird das Dichtelement lediglich durch ein einen Formschluss bildende Haltemittel am betreffenden Gehäuseelement gehalten, so dass sich der Außenabschnitt in radiale Richtungen verformen kann, im Gegensatz zu einer vollflächig stoffschlüssigen Verbindung zwischen Dichtelement und Gehäuseelement, bei der das Dichtelement fest und in radiale Richtungen unbeweglich mit dem Gehäuseelement verbunden ist.

Das erste Gehäuseelement kann an seiner dem ringförmigen Dichtelement abgewandten Rückseite eine ringförmige Nut zur Aufnahme einer korrespondierend dazu ausgebildeten Verankerungspartie des zugeordneten Haltemittels aufweisen, wobei die Nut über in axialer Richtung verlaufende, insbesondere in regelmäßigen Abständen über den Umfang der Nut verteilte, von den Haltemitteln durchgriffene Öffnungen, insbesondere zylindrische Bohrungen, mit der Vorderseite des ersten Gehäuseelements verbunden ist.

Es ist möglich das Dichtelement von der Rückseite des ersten Gehäuseelements her anzuspritzen, wobei plastifiziertes Dichtelementmaterial über die Öffnungen zur Vorderseite gelangen und dort in einer, die Form des Dichtelements vorgebenden Negativform in seine spätere Gestalt erstarren kann.

Das Dichtungs-Gehäuse kann aus mehreren ersten und mehreren zweiten Gehäuseelementen bestehen, wobei die ersten und/oder zweiten Gehäuseelemente an ihrem dem Dichtelement abgewandten Rückseiten über Abstandshalter bzw. Distanzelemente mit benachbarten ersten oder zweiten Gehäuseelementen gekoppelt sind. Es ist möglich, dass das erste Gehäuseelement über Abstandsschalter mit einem benachbarten zweiten und das zweite Gehäuseelement dementsprechend mit einem benachbarten ersten Gehäuseelement gekoppelt ist. In bevorzugter Weise befinden sich die Abstandshalter lediglich an den Rückseiten der zweiten, das Beaufschlagungsmittel aufweisenden Gehäuseelemente, insbesondere sind die Abstandshalter einstückig mit dem zweiten Gehäuseelement verbunden.

Die ersten und zweiten Gehäuseelemente können aus dem selben Material hergestellt sein, beispielsweise aus Polymermaterial. Es sind jedoch auch andere Werkstoffe einsetzbar, beispielsweise Metalle und/oder Metalllegierungen.

Ein bevorzugtes Ausführungsbeispiel der Erfindung ist in den Zeichnungen dargestellt und wird im folgenden näher erläutert. Die Zeichnungen zeigen:
- Figur 1: ein bevorzugtes Ausführungsbeispiel des erfindungsgemäßen Ventils im Längsschnitt,
- Figur 2: eine schematische perspektivische, teilweise geschnittene Ansicht zweier Gehäuseelemente mit dazwischen angeordnetem Dichtelement, wobei in Darstellung A der ungespannte und in Darstellung B der gespannte Zustand gezeigt ist,
- Figur 3: eine perspektivische Ansicht auf ein zweites Gehäuseelement des Dichtungs-Gehäuses des erfindungsgemäßen Ventils,
- Figur 4: einen Längsschnitt durch das Gehäuseelement von Figur 3,
- Figur 5: einen Längsschnitt durch ein erstes Gehäuseelement mit angeformtem Dichtelement und
- Figur 6: in drei aufeinander folgenden Abbildungen A bis C einen Längsschnitt durch das erste und zweite Gehäuseelement samt Dichtungselement beim Zusammenfügen der Gehäuseelemente.

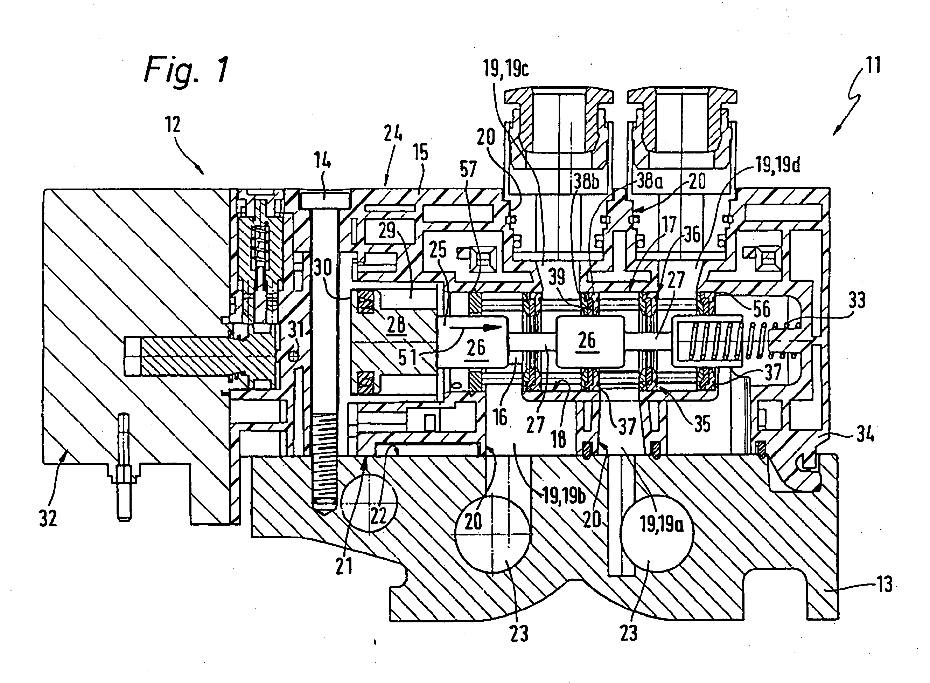

Die Figur 1 zeigt ein Ventil 11 als Bestandteil einer insgesamt mit Bezugsziffer 12 bezeichneten Ventilanordnung, die zusätzlich noch über einen bevorzugt plattenartig ausgebildeten Fluidverteiler 13 verfügt, auf dem das Ventil 11 lösbar, mittels geeigneten Befestigungsmitteln 14, befestigt ist.

Das Ventil 11 dient zur Steuerung von Fluidströmen und ist als Mehrwegeventil ausgeführt. Bei dem zu steuernden Medium handelt es sich insbesondere um Druckluft, wobei es sich allerdings auch um ein sonstiges gasförmiges oder hydraulisches Medium handeln kann.

Das Ventil 11 verfügt über ein Ventilgehäuse 15, in dem wenigstens eine sich linear erstreckende, längliche Gehäuseausnehmung 16 vorgesehen ist. Umfangsseitig ist die Gehäuseausnehmung 16 von einer Gehäusewand 17 des Ventilgehäuses 15 begrenzt.

Die Gehäusewand 17 und insbesondere das gesamte Ventilgehäuse 15 bestehen beim Ausführungsbeispiel aus Kunststoffmaterial. Die Herstellung erfolgt zweckmäßigerweise durch Spritzgießen, wobei ein Nachbearbeiten der die Gehäuseausnehmung 16 definierenden und nach radial innen orientierten Wandfläche 18 der Gehäusewand 17 nicht oder in nur geringem Maße erforderlich ist. Eine Bauform aus Metall wäre prinzipiell ebenfalls möglich.

In die Gehäuseausnehmung 16 münden im Bereich der Wandfläche 18 an mehreren in der Längsrichtung der Gehäuseausnehmung 16 beabstandeten Stellen Ventilkanäle 19 ein. Diese durchsetzen die Gehäusewand 17 und bilden an ihrem äußeren Ende Anschlussöffnungen 20. Gemäß bevorzugtem Ausführungsbeispiel münden drei dieser Anschlussöffnungen zu einer außenliegenden Montagefläche 21 des Ventilgehäuses 15, mit der das Ventil 11 an einer Bestückungsfläche 22 des Fluidverteilers 13 angesetzt ist. In letzterem verlaufen mehrere Fluidverteilerkanäle 23, die zur Bestückungsfläche 22 ausmünden und dort mit den Anschlussöffnungen 20 paarweise kommunizieren.

Gemäß dem Ausführungsbeispiel münden zwei weitere der Anschlussöffnungen 20 an einer der Montagefläche 21 insbesondere entgegengesetzten Anschlussfläche 24 des Ventilgehäuses 15 und sind dazu vorgesehen, das Anschließen nicht näher dargestellter Fluidleitungen zu ermöglichen, die zu einem anzusteuernden Verbraucher führen.

Bei dem Ventil 11 des Ausführungsbeispiels handelt es sich um ein 4/2-Wegeventil. Es ist jedoch auch denkbar 3/2 oder 5/2-Wegeventile einzusetzen. Beim gezeigten 4/2-Wegeventil handelt es sich bei den zur Montagefläche 21 ausmündenden Ventilkanälen 19 um einen mittleren Speisekanal 19a, der axial von einem Entlüftungskanal 19b flankiert ist. Die beiden zur Anschlussfläche 24 führenden Ventilkanäle 19 sind Arbeitskanäle 19c und 19d.

Auf dem Fluidverteiler 13 können mehrere Ventile 11 positioniert sein, die jeweils zuordnungsrichtig mit dem Fluidverteilerkanälen 23 verbunden sind.

In der Gehäuseausnehmung 16 ist ein länglicher kolbenartiger Ventilschieber 25 angeordnet. Er verfügt über mehrere Steuerabschnitte 26 größeren Durchmessers, zwischen denen jeweils ein Steuerabschnitt 27 kleineren Durchmessers plaziert ist. Dem Ventilschieber 25 zugeordnete Betätigungsmittel ermöglichen ein axial verlagern und positionieren des ventilschiebers 25 in der Gehäuseausnehmung 16 relativ zum Ventilgehäuse 15.

Die Betätigungsmittel enthalten beim Ausführungsbeispiel einen mit dem Ventilschieber 25 einenends in Wirkverbindung stehenden Antriebskolben 28. Dieser ist in einem als Betätigungsraum 29 bezeichneten Endabschnitt der Gehäuseausnehmung 16 unter Abdichtung verschiebbar geführt.

Der auf der dem Ventilschieber 25 entgegengesetzten Seite des Antriebskolbens 28 liegende äußere Abschnitt 30 des Betätigungsraumes 29 kommuniziert auf nicht näher dargestellte Weise mit einem Steuerkanal 31, über den ein fluidisches Steuermedium wahlweise zugeführt oder abgeführt werden kann. Die entsprechende Steuerung übernimmt ein elektrisch aktivierbares Vorsteuerventil 32 das an das Ventilgehäuse 15 angebaut ist.

Vergleichbare Betätigungsmittel können auch dem entgegengesetzten Ende des Ventilschiebers 25 zugeordnet sein. Abweichend hiervon findet sich dort beim Ausführungsbeispiel allerdings nur eine Rückstellfeder 33, die zwischen dem Ventilgehäuse 15 und dem Ventilschieber 25 wirksam ist und den Ventilschieber 25 ständig in Richtung zum Antriebskolben beaufschlagt.

Im deaktivierten Zustand des Vorsteuerventils 32 nimmt der Ventilschieber 25, bedingt durch die Vorspannung der Rückstellfeder 33, die aus der Zeichnung ersichtliche erste Schaltstellung ein. Durch Aktivieren des Vorsteuerventils 32 wird der Antriebskolben 28 und somit der Ventilschieber 25 unter gleichzeitiger Komprimierung der Rückstellfeder 33 nach rechts in eine zweite Schaltstellung verlagert.

Die Gehäuseausnehmung 16 ist an beiden Stirnseiten geschlossen. An wenigstens einer Stirnseite erfolgt der Verschluss durch einen lösbar am Ventilgehäuse 15 befestigten Verschlussdeckel 34. Im entfernten Zustand des Verschlussdeckels 34 ist die Gehäuseausnehmung 16 von der entsprechenden Stirnseite her zugänglich.

In der Gehäuseausnehmung 16 befindet sich eine zwischen dem Ventilschieber 25 und der Gehäusewand 17 wirksame Dichtungseinrichtung 35. Sie sitzt koaxial zwischen der Wandfläche 18 und dem Ventilschieber 25, wobei sie von letzterem koaxial durchsetzt wird.

Die Dichtungseinrichtung besitzt ein Dichtungsgehäuse 36, das seinerseits aus mindestens einer, vorzugsweise aus mehreren Dichtungseinheiten 37 aufgebaut ist, wobei gemäß dem Ausführungsbeispiel vier bzw. fünf Dichtungseinheiten 37 vorhanden sind.

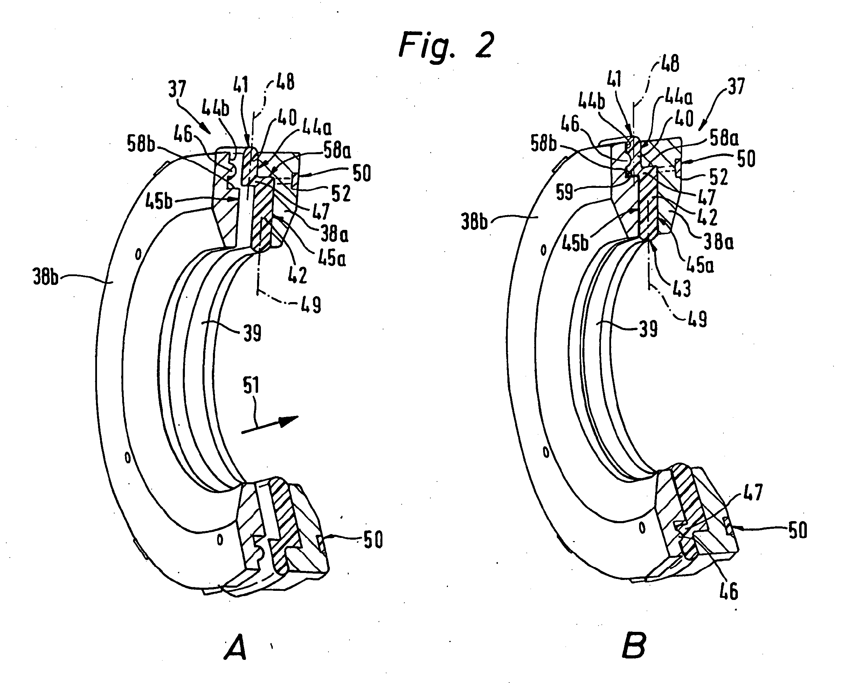

Wie insbesondere in Figur 2 dargestellt, ist eine Dichtungseinheit 37 jeweils aus einem ersten, ringförmigen Gehäuseelement 38a und einem in axialer Richtung benachbarten zweiten, ringförmigen Gehäuseelement 38b aufgebaut, wobei zwischen dem ersten und zweiten Gehäuseelement 38a, 38b ein ringförmiges Dichtelement 39 fixiert ist.

Das Dichtelement 39 besteht aus einem Außenabschnitt 40 mit äußerem Dichtbereich 41 zur Abdichtung gegenüber der Gehäuseausnehmung 16 und einen Innenabschnitt 42 mit innerem Dichtbereich 43 zur Abdichtung gegenüber dem Ventilschieber 25.

Im montierten Zustand der Dichtungseinrichtung 35 ist der Außenabschnitt 40 zwischen zwei zugeordneten Gehäuse-Außenabschnitten 44a, 44b der beiden Gehäuseelemente 38a, 38b fixiert, während dem Innenabschnitt 42 Gehäuse-Innenabschnitte 45a, 45b der beiden Gehäuseelemente 38a, 38b zugeordnet sind.

An mindestens einem der Gehäuse-Außenabschnitte 44a, 44b, insbesondere am Gehäuse-Außenabschnitt 44b des zweiten Gehäuseelements 38b, das auch als Spannteil bezeichnet werden kann, befindet sich wenigstens ein Beaufschlagungsmittel 46, das den Außenabschnitt 40 des Dichtelements 39 derart beaufschlägt, dass der Außenabschnitt 40 und damit der äußere Dichtbereich 41 zur Erzielung einer Dichtwirkung radial nach außen gegen die Gehäusewand 17 gepresst wird.

Das Beaufschlagungsmittel ist beispielhaft in Form eines am Gehäuse-Außenabschnitt 44b des zweiten Gehäuseelements 38b befindlichen, ringförmigen, zum zu beaufschlagenden Dichtelement 39 hin weisenden Wulstes 46 dargestellt. Der Wulst 46 kann beim Zusammenspannen der Gehäuseelemente in den Außenabschnitt 40 eindringen, so dass sich der Außenabschnitt nach radial außen verformt, womit eine Dichtwirkung gegenüber der Gehäuseausnehmung 16 erreicht wird. Es ist selbstverständlich auch möglich Beaufschlagungsmittel an beiden Gehäuseelementen 38a, 38b vorzusehen, beispielsweise zwei sich gegenüberliegende Wülste 46 vorzusehen, zwischen denen der Außenabschnitt 40 des Dichtelements 39 eingespannt ist. Eine Alternative ist, ein Beaufschlagungsmittel am ersten Gehäuseelement vorzusehen.

Das Dichtelement 39 besitzt ferner wenigstens ein Entkopplungsmittel 47, das bewirkt, dass der Innenabschnitt 42 des Dichtelements 39 von den aus der Beaufschlagung des Außenabschnitts 40 resultierenden, nach radial innen gerichteten Kräften entkoppelt ist. Das Entkopplungsmittel ist beispielhaft anhand eines Übergangsabschnitts 47 dargestellt, der quer zum Außen- und zum Innenabschnitt 40, 41 des Dichtelements 39 angeordnet ist und einenends mit dem Außenabschnitt 40 und andernends mit dem Innenabschnitt 41 verbunden ist. Durch den Übergangsabschnitt 47 wird erreicht, dass die Außenabschnitts-Radialebene 48 des Außenabschnitts 40, die den äußeren Dichtbereich enthält axial versetzt zur Innenabschnitts-Radialebene 49 des Innenabschnitts, die den inneren Dichtbereich enthält, angeordnet ist. Eine Beaufschlagung des Außenabschnitts und eine insbesondere damit verbundene Bewegung desselbigen nach radial innen, wird also durch den Übergangsabschnitt 47 aufgefangen und nicht auf den Innenabschnitt 42 übertragen, so dass dort keine Bewegung nach radial innen erfolgt. Eine Bewegung des Dichtelements 39 nach radial innen ist unerwünscht, da dadurch zusätzlich Reibung zwischen dem inneren Dichtbereich 43 und dem Ventilschieber 25 entstehen könnte, was zu erhöhtem Verschleiß des Dichtelements 39 und/oder zu einer Beeinträchtigung der Schaltfunktion des Ventils 11 führen könnte.

Das Dichtelement 39 hat insgesamt die Gestalt eines abgesetzten bzw. abgestuften Dichtungsrings, wobei Außenabschnitt, Übergangsabschnitt und Innenabschnitt 40, 42, 47 einstückig miteinander verbunden sind und durch einen einzigen Dichtelement-Herstellungsprozeß hergestellt werden können. Das Dichtelement 39 besteht aus einem relativ weichen Elastomermaterial, das vorzugsweise weicher ist, als der Wulst 46 am zweiten Gehäuseelement 38b, so dass dieser beim Zusammenspannen der Gehäuseelemente 38a, 38b in das weiche Elastomermaterial eindringen und den Außenabschnitt 40 verformen kann, so dass der äußere Dichtbereich 41 gegen die Wandfläche 18 der Gehäusewand 17 gepresst wird. Als Elastomermaterial kann beispielsweise ein thermoplastisches Elastomer eingesetzt werden.

Während das zweite Gehäuseelement 38b mit seinem Wulst 46 zum Beaufschlagen bzw. Spannen des Dichtelements 39 dient, ist das erste Gehäuseelement 38a, das auch als Trägerteil bezeichnet werden kann, zum Tragen des Dichtelements 39 bestimmt. Die Befestigung des Dichtelements 39 am ersten Gehäuseelement 38a erfolgt über Haltemittel 50, die einen Formschluss zwischen Dichtelement 39 und erstem Gehäuseelement 38a bilden, so dass das Dichtelement 39 entgegen einer Montagerichtung 51 nicht wieder vom ersten Gehäuseelement 38a abgezogen werden kann.

Die Haltemittel 50 werden vom Dichtelement 39 selbst gebildet, insbesondere werden sie bei der Herstellung des Dichtelements 39 mit angeformt. Zweckmäßigerweise ist das erste Gehäuseelement 38a derart ausgebildet, dass das Dichtelement 39 daran angeformt, vorzugsweise mittels eines Spritzprozesses, beispielsweise mittels eines Elastomer-Spritzgießverfahrens daran angespritzt werden kann.

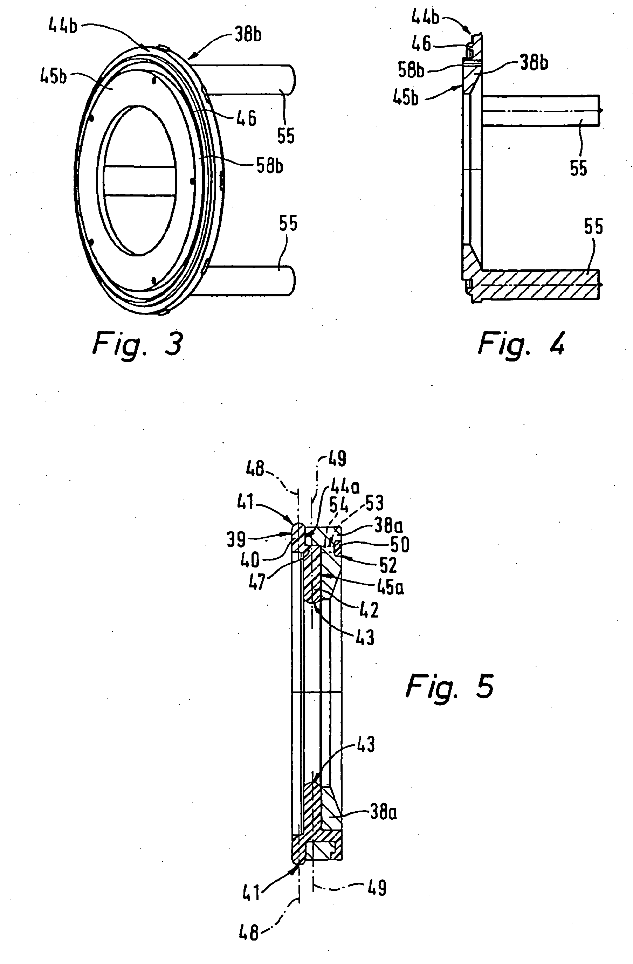

Wie insbesondere in Figur 5 dargestellt besitzt das erste Gehäuseelement 38a an seiner dem Dichtelement 39 gegenüberliegenden Rückseite eine ringförmige, umlaufende Nut 52, an deren Nutgrund Öffnungen 53 vorgesehen sind, die an der Vorderseite des ersten Gehäuseelements 38a ausmünden. Die ringförmige Nut 52 und die Öffnungen 53, die vorzugsweise als Bohrungen mit kreisrundem Querschnitt ausgebildet sind, dienen zur Aufnahme von Verankerungspartien 54 der Haltemittel 50. Es ist beispielsweise möglich das Dichtelement 39 von der Rückseite des ersten Gehäuseelements 38a her zunächst die ringförmige Nut 52 füllend anzuspritzen, so dass plastifiziertes Dichtelement-Material über die Öffnungen 53 zur Innenseite gelangt und dort ein in einer die Gestalt des Dichtelements 39 vorgebenden Negativform aufgenommen wird und dort zu seiner endgültigen Gestalt erstarrt.

Die einzelnen Dichtungseinheiten 37 der Dichtungseinrichtung 35 sind in regelmäßigen Abständen entlang der Gehäuseausnehmung 16 des Ventilgehäuses 15 angeordnet. Dieser regelmäßige Abstand wird durch Abstandshalter bzw. Distanzelemente 55 erreicht, die vorzugsweise an der dem Dichtelement39 abgewandten Außenseite des zweiten Gehäuseelements 38b befestigt sind.

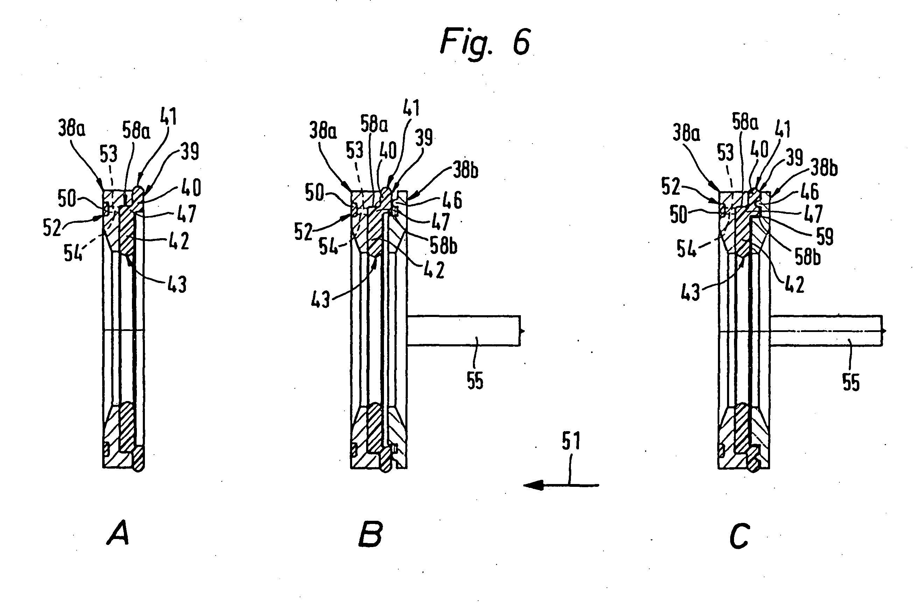

Wie in Figur 6 in drei aufeinanderfolgenden Schritten A bis C dargestellt erfolgt die Montage der Dichtungseinrichtung 35 gemäß dem gezeigten Ausführungsbeispiel von der Seite, an dem sich das Vorsteuerventil 32 befindet, also in einer Montagerichtung 51 von links nach rechts. Dabei wird zunächst ein erstes Gehäuseelement 38a samt daran befestigtem Dichtelement 39 in die Gehäuseausnehmung 16 eingeschoben, bis es seinen vorbestimmten Platz entlang der Gehäuseausnehmung 16 erreicht, der im gezeigten Ausführungsbeispiel durch eine Abstufung 56 am Verschlußdeckel 34 gebildet wird. Beim Einschieben des ersten Gehäuseelements 38a mitsamt dem Dichtelement 39 werden die seitlich in die Gehäuseausnehmung 16 einmündenden Ventilkanäle 19a bis 19d passiert. Bei herkömmlichen Dichtungseinrichtungen deren Dichtungselemente bereits beim Montieren press an der Gehäusewand 17 anliegen, entspannen sich die Dichtungselemente, wenn sie über die Mündungen der Ventilkanäle gedrückt werden. Dies hat zur Folge, dass sich das elastische Gummi-Dichtelementmaterial etwas in die Mündungen hineinverformt. Wird die Dichtungseinrichtung 35 nun in Montagerichtung 51 weitergedrückt bleibt der in die Mündung hineinverformte Abschnitt des Dichtelements am Rand der Mündung hängen, was zur Beschädigung des Dichtelements führen kann. Beim erfindungsgemäßen Ventil 11 ist das Dichtelement 39 während des Montierens nicht unter Spannung, das heißt, es wird noch nicht gegen die Wandfläche 18 der Gehäuseausnehmung 6 gepreßt. Die Dichtwirkung wird erst mit dem Zusammenspannen der beiden Gehäuseelemente 38a, 38b erzeugt.

Folglich verformt sich das zu montierende Dichtelement 39 auch nicht in die Kanalmündungen der zu passierenden Ventilkanäle hinein, was den zuvor beschriebenen Effekt verhindert.

Als nächstes wird das dazugehörige, zweite Gehäuseelement 38b eingeschoben und mit dem ersten Gehäuseelement zusammengespannt, wobei der am Gehäuse-Aussenabschnitt 44b des zweiten Gehäuseelements 38b befindliche Wulst 46 in den Außenabschnitt 40 des Dichtelements 39 eingedrückt wird, so dass sich der Außenabschnitt 40 und somit der äußere Dichtbereich 41 radial außen verformt und eine Dichtwirkung gegenüber der Wandfläche 18 der Gehäusewand 17 erzielt wird. Gleichzeitig verhindert der zwischen dem Außenabschnitt 40 und dem Innenabschnitt 42 ausgebildete, quer zu diesen beiden Abschnitten liegende Übergangsabschnitt 47, dass der Innenabschnitt 42 mitverformt wird. An der dem Dichtelement 39 abgewandten Außenseite des zweiten Gehäuseelements 38b befinden sich über den Umfang des zweiten Gehäuseelements 38b verteilt mehrere, insbesondere drei Abstandshalter 55, die die Lage der nächsten, in Montagerichtung 51 davor liegenden Dichtungseinheit 37 festlegen. Als nächstes wird dann wiederum ein erstes Gehäuseelement samt Dichtelement 39 eingeschoben, bis es an den Abstandshalter anstößt. So können nach und nach mehrere, im Ausführungsbeispiel fünf, Dichtungseinheiten 37 eingeschoben werden. Bei der letzten Dichtungseinheit 37 besitzt das zweite Gehäuseelement 38b keinen Abstandshalter 55 mehr, sondern zweckmäßigerweise Verzahnungsmittel 57, mit der diese Dichtungseinheit 37 in der Gehäuseausnehmung 16 festgelegt und die gesamte Dichtungseinrichtung 35 gegen Herausziehen entgegen der Montagerichtung 51 verrastet wird.

## Patentansprüche

1. Ventil, mit einem Ventilgehäuse (15), das eine zur Aufnahme eines Ventilschiebers (25) vorgesehene, umfangsseitig von einer Gehäusewand (17) begrenzte längliche Gehäuseausnehmung (16) aufweist, in die seitlich mindestens ein Ventilkanal (19) einmündet und in der eine vom Ventilschieber (25) durchsetzte Dichtungseinrichtung (35) angeordnet ist, die ein Dichtungs-Gehäuse (36) besitzt, das wenigstens ein ringförmiges Dichtelement (39) aufweist, das einen Außenabschnitt (40) mit äußerem Dichtbereich (41) zur Abdichtung gegenüber der Gehäuseausnehmung (16) und einen Innenabschnitt (42) mit innerem Dichtbereich (43) zur Abdichtung gegenüber dem Ventilschieber (25) besitzt, wobei das Dichtungs-Gehäuse (36) im Bereich des Dichtelementes (39) zwei das Dichtelement (39) zwischen sich fixierende ringförmigen Gehäuseelemente (38a, 38b) aufweist, wobei wenigstens eines der Gehäuseelemente (38a, 38b) an der dem Außenabschnitt (40) axial zugeordneten Seite über wenigstens ein Beaufschlagungsmittel (46) verfügt, das beim Zusammenspannen der Gehäuseelemente (38a, 38b) lokal den Außenabschnitt (40) derart beaufschlägt, dass der Außenabschnitt (40) zur Erzielung einer Dichtwirkung radial nach außen gegen die Gehäusewand (17) pressbar ist, wobei der Außenabschnitt (40) eine den äußeren Dichtbereich (41) enthaltende Außenabschnitts-Radialebene (48) und der Innenabschnitt (42) eine den inneren Dichtbereich (43) enthaltende Innenabschnitts-Radialebene (49) aufweist, und wobei wenigstens ein Entkopplungsmittel zur Entkopplung des Innenabschnitts (42) von den aus der Beaufschlagung des Außenabschnitts (40) resultierenden, nach radial innen gerichteten Kräften in Form eines zwischen dem Außenabschnitt (40) und dem Innenabschnitt (42) befindlichen, einerseits mit dem Außenabschnitt (40) und andererseits mit dem Innenabschnitt (42) verbundenen, quer zum Außen- und zum Innenabschnitt (40, 42) ausgerichteten Übergangsabschnitt (47) vorgesehen ist, der bewirkt, dass die Außenabschnitts-Radialebene (48) axial versetzt zur Innenabschnitts-Radialebene (49) angeordnet ist, und wobei die Gehäuseelemente (38a, 38b) korrespondierend zum Übergangsabschnitt (47) des Dichtelements (39) verlaufende Gehäuse-Übergangsabschnitte (58a, 58b) aufweisen, wobei im montierten Zustand der Dichtungseinrichtung (35) der Übergangsabschnitt (47) des Dichtelements (39) zwischen den Gehäuse-Übergangsabschnitten (58a, 58b) angeordnet ist, **dadurch gekennzeichnet, dass** radial zwischen dem Übergangsabschnitt (47) des Dichtelements (39) und dem den Übergangsabschnitt radial innen flankierenden Gehäuse-Übergangsabschnitt (58a, 58b) im montierten Zustand der Dichtungseinrichtung (35) ein Freiraum (59) ausgebildet ist.

2. Ventil nach Anspruch 1, **dadurch gekennzeichnet, dass** der Übergangsabschnitt (47) im wesentlichen senkrecht zum Außen- und zum Innenabschnitt (40, 42) ausgerichtet ist.

3. Ventil nach Anspruch 1 oder 2, **dadurch gekennzeichnet, dass** Außenabschnitt (40), Übergangsabschnitt (47) und Innenabschnitt (42) einstückig miteinander verbunden sind.

4. Ventil nach einem der vorhergehenden Ansprüche, **dadurch gekennzeichnet, dass** Außenabschnitt (40), Übergangsabschnitt (47) und Innenabschnitt (42) aus dem selben Material hergestellt sind, insbesondere aus Elastomermaterial.

5. Ventil nach Anspruch 4, **dadurch gekennzeichnet, dass** als Elastomermaterial ein thermoplastisches Elastomer vorgesehen ist.

6. Ventil nach einem der vorhergehenden Ansprüche, **dadurch gekennzeichnet, dass** wenigstens ein erstes Gehäuseelement (38a) vorgesehen ist, das mittels Haltemitteln (50) mit dem Dichtelement (39) verbunden ist und wenigstens ein zweites Gehäuseelement (38b) vorgesehen ist, das über das Beaufschlagungsmittel (46) zur Beaufschlagung des Außenabschnitts (40) des Dichtelements (39) verfügt.

7. Ventil nach Anspruch 6, **dadurch gekennzeichnet, dass** als Beaufschlagungsmittel ein ringförmiger Wulst (46) vorgesehen ist, der von der dem Außenabschnitt (40) des Dichtelements (39) zugeordneten Seite des zweiten Gehäuseelements (38b) axial hervorsteht.

8. Ventil nach Anspruch 7, **dadurch gekennzeichnet, dass** der Wulst (46) aus einem im vergleich zum Material des Außenabschnitts (40) härteren Material hergestellt ist.

9. Ventil nach einem der Ansprüche 6 bis 8, **dadurch gekennzeichnet, dass** die Haltemittel (50) einen Formschluss zwischen dem ersten Gehäuseelement (38a) und dem zu haltenden Dichtelement (39) bilden.

10. Ventil nach einem der Ansprüche 6 bis 9, **dadurch gekennzeichnet, dass** die Haltemittel (50) vom Dichtelement (39) selbst gebildet sind, vorzugsweise an dieses angeformt sind.

11. Ventil nach einem der Ansprüche 6 bis 10, **dadurch gekennzeichnet, dass** das erste Gehäuseelement (38a) an seiner dem Dichtelement abgewandten Rückseite eine ringförmige Nut (52) zur Aufnahme einer korrespondierend dazu ausgebildeten Verankerungspartie (54) des zugeordneten Haltemittels (50) aufweist, wobei die Nut (52) über in axialer Richtung verlaufende, insbesondere in regelmäßigen Abständen über den Umfang der Nut (52) verteilte Öffnungen (53) mit der Vorderseite des Gehäuseelements (38a) verbunden ist, die von den Haltemitteln (50) durchgriffen werden.

12. Ventil nach einem der vorhergehenden Ansprüche, **dadurch gekennzeichnet, dass** die ersten und/oder zweiten Gehäuseelemente (38a, 38b) an ihren dem Dichtelement (39) abgewandten Rückseiten über Abstandshalter (55) mit benachbarten weiteren ersten oder zweiten Gehäuseelementen (38a, 38b) gekoppelt sind, wobei vorzugsweise das erste Gehäuseelement (38a) mit einem benachbarten weitern zweiten und das zweite Gehäuseelement (38b) mit einem benachbarten weiteren ersten Gehäuseelement (38a) gekoppelt ist.

13. Ventil nach Anspruch 12, **dadurch gekennzeichnet, dass** die Abstandshalter (50) am zweiten Gehäuseelement (38b) befestigt, insbesondere daran angeformt sind.

14. Ventil nach einem der vorhergehenden Ansprüche, **dadurch gekennzeichnet, dass** die ersten und zweiten Gehäuseelemente (38a, 38b) aus dem selben Material hergestellt sind, insbesondere aus Polymermaterial.

## Claims

1. Valve, with a valve casing (15) which has an oblong casing recess (16) bounded on the peripheral side by a casing wall (17) and provided to accommodate a valve spool (25), into the side of which casing recess there leads at least one valve passage (19), and in which is arranged a seal device (35) through which the valve spool (25) passes and which has a seal housing (36) with at least one sealing element (39), which has an outer section (40) with an outer sealing area (41) for sealing against the casing recess (16), and an inner section (42) with an inner sealing area (43) for sealing against the valve spool (25), wherein the seal housing (36) has in the area of the sealing element (39) two annular housing elements (38a, 38b) which fix the sealing element (39) between them, wherein at least one of the housing elements (38a, 38b) has on the side axially assigned to the outer section (40) at least one pressure application means (46) which, when the housing elements (38a, 38b) are clamped together, applies local pressure to the outer section (40) in such a way that the outer section (40) may be pressed radially outwards against the casing wall (17) to obtain a sealing effect, wherein the outer section (40) has an outer section radial plane (48) containing the outer sealing area (41) and the inner section (42) has an inner section radial plane (49) containing the inner sealing area (43), and wherein there is provided at least one decoupling means for decoupling the inner section (42) from the radially inwards directed forces resulting from the pressure application of the outer section (40), in the form of a transition section (47) located between the outer section (40) and the inner section (42), connected at one end to the outer section (40) and at the other end to the inner section (42), and aligned at right-angles to the outer and inner sections (40, 42), which has the effect that the outer section radial plane (48) is axially offset relative to the inner section radial plane (49), and wherein the housing elements (38a, 38b) have housing transition sections (58a, 58b) running in a corresponding manner to the transition section (47) of the sealing element (39), wherein in the fitted state of the seal device (35) the transition section (47) of the sealing element (39) is located between the housing transition sections (58a, 58b), **characterised in that**, in the fitted state of the seal device (35), a clearance (59) is formed radially between the transition section (47) of the sealing element (39) and the housing transition section (58a, 58b) flanking the transition section on the radial inside.

2. Valve according to claim 1, **characterised in that** the transition section (47) is aligned substantially at right-angles to the outer and the inner sections (40, 42).

3. Valve according to claim 1 or 2, **characterised in that** the outer section (40), transition section (47) and inner section (42) are joined together to form a single piece.

4. Valve according to any of the preceding claims, **characterised in that** the outer section (40), transition section (47) and inner section (42) are made from the same material, in particular elastomer material.

5. Valve according to claim 4, **characterised in that** a thermoplastic elastomer is provided as the elastomer material.

6. Valve according to any of the preceding claims, **characterised in that** at least one first housing element (38a) is provided, connected to the sealing element (39) by holding means (50), and at least one second housing element (38b) is provided and has pressure application means (46) for applying pressure to the outer section (40) of the sealing element (39).

7. Valve according to claim 6, **characterised in that** there is provided as pressure application means an annular bead (46) which protrudes axially from the side of the second housing element (38b) assigned to the outer section (40) of the sealing element (39).

8. Valve according to claim 7, **characterised in that** the bead (46) is made of a harder material than the material of the outer section (40).

9. Valve according to any of claims 6 to 8, **characterised in that** the holding means (50) form a positive connection between the first housing element (38a) and the sealing element (39) to be held.

10. Valve according to any of claims 6 to 9, **characterised in that** the holding means (50) are formed by the sealing element (39) itself, preferably moulded integrally to it.

11. Valve according to any of claims 6 to 10, **characterised in that** the first housing element (38a) has on its rear side facing away from the sealing element an annular slot (52) for accommodating a corresponding anchoring section (54) of the assigned holding means (50), wherein the slot (52) is connected to the front of the housing element (38a) via openings (53) running in the axial direction, in particular distributed at regular intervals over the circumference of the slot (52), and through which the holding means (50) reach.

12. Valve according to any of the preceding claims, **characterised in that** the first and/or second housing elements (38a, 38b) are coupled on their rear sides facing away from the sealing element (39), via spacers (55), to adjacent further first or second housing elements (38a, 38b), wherein preferably the first housing element (38a) is coupled to an adjacent further second housing element, and the second housing element (38b) to an adjacent further first housing element (38a).

13. Valve according to claim 12, **characterised in that** the spacers (50) are fixed to the second housing element (38b), in particular moulded on to it.

14. Valve according to any of the preceding claims, **characterised in that** the first or second housing elements (38a, 38b) are made of the same material, in particular of polymer material.

## Revendications

1. Soupape avec un boîtier de soupape (15) qui présente un évidement de boîtier (16) oblong, limité côté périphérie par une paroi de boîtier (17), prévu pour loger un tiroir de soupape (25), dans lequel au moins un canal de soupape (19) débouche latéralement et dans lequel est disposé un dispositif d'étanchéité (35) traversé par le tiroir de soupape (25), lequel possède un boîtier d'étanchéité (36) qui présente au moins un élément étanche (39) annulaire qui possède une section extérieure (40) avec une zone étanche (41) extérieure pour réaliser l'étanchéité par rapport à l'évidement de boîtier (16) et une section intérieure (42) avec une zone étanche (43) intérieure pour réaliser l'étanchéité par rapport au tiroir de soupape (25), le boîtier d'étanchéité (36) dans la zone de l'élément étanche (39) présentant deux éléments de boîtier (38a, 38b) annulaires, fixant l'élément étanche (39) entre eux, au moins l'un des éléments de boîtier (38a, 38b) disposant, sur le côté associé axialement à la section extérieure (40), d'au moins un moyen de sollicitation (46) qui sollicite localement lors du serrage des éléments de boîtier (38a, 38b) la section extérieure (40) de telle sorte que la section extérieure (40) puisse être pressée radialement vers l'extérieur contre la paroi de boîtier (17) pour obtenir un effet d'étanchéité étanche, la section extérieure (40) présentant un plan radial de section extérieure (48) contenant la zone d'étanchéité (41) extérieure et la section intérieure (42) présentant un plan radial de section intérieure (49) contenant la zone étanche (43) intérieure, et au moins un moyen de découplage étant prévu pour découpler la section intérieure (42) des forces dirigées radialement vers l'intérieur, résultant de la sollicitation de la section extérieure (40), sous la forme d'une section de transition (47) orientée alignée transversalement à la section extérieure et à la section intérieure (40, 42), reliée d'une part à la section extérieure (40) et d'autre part à la section intérieure (42), se trouvant entre la section extérieure (40) et la section intérieure (42), laquelle a pour effet que le plan radial de la section extérieure (48) soit disposé en déport axial par rapport au plan radial de la section intérieure (49), et les éléments de boîtier (38a, 38b) présentant des sections de transition de boîtier (58a, 58b) s'étendant de manière correspondante à la section de transition (47) de l'élément étanche (39), la section de transition (47) de l'élément étanche (39) étant disposée entre les sections de transition de boîtier (58a, 58b) à l'état monté du dispositif d'étanchéité (35), **caractérisée en ce qu'**un espace libre (59) est formé radialement entre la section de transition (47) de l'élément étanche (39) et la section de transition de boîtier (58a, 58b) jouxtant radialement à l'intérieur la section de transition à l'état monté du dispositif d'étanchéité (35).

2. Soupape selon la revendication 1, **caractérisée en ce que** la section de transition (47) est alignée sensiblement perpendiculairement à la section extérieure et à la section intérieure (40, 42).

3. Soupape selon la revendication 1 ou 2, **caractérisée en ce que** la section extérieure (40), la section de transition (47) et la section intérieure (42) sont reliées d'un seul tenant entre elles.

4. Soupape selon l'une des revendications précédentes, **caractérisée en ce que** la section extérieure (40), la section de transition (47) et la section intérieure (42) sont fabriquées dans la même matière, en particulier en matière élastomère.

5. Soupape selon la revendication 4, **caractérisée en ce qu'**un élastomère thermoplastique est prévu comme matière élastomère.

6. Soupape selon l'une des revendications précédentes, **caractérisée en ce qu'**au moins un premier élément de boîtier (38a) est prévu, lequel est relié au moyen de moyens de retenue (50) à l'élément étanche (39) et au moins un second élément de boîtier (38b) est prévu, lequel dispose du moyen de sollicitation (46) servant à solliciter la section extérieure (40) de l'élément étanche (39).

7. Soupape selon la revendication 6, **caractérisée en ce qu'**un bourrelet (46) annulaire est prévu comme moyen de sollicitation, lequel dépasse axialement du côté associé à la section extérieure (40) de l'élément étanche (39) du second élément de boîtier (38b).

8. Soupape selon la revendication 7, **caractérisée en ce que** le bourrelet (46) est fabriqué en une matière plus dure que la matière de la section extérieure (40).

9. Soupape selon l'une des revendications 6 à 8, **caractérisée en ce que** les moyens de retenue (50) forment un engagement positif entre le premier élément de boîtier (38a) et l'élément étanche (39) à retenir.

10. Soupape selon l'une des revendications 6 à 9, **caractérisée en ce que** les moyens de retenue (50) sont formés par l'élément étanche (39) lui-même, de préférence sont surmoulés sur celui-ci.

11. Soupape selon l'une des revendications 6 à 10, **caractérisée en ce que** le premier élément de boîtier (38a) présente sur son côté arrière, éloigné de l'élément étanche, une rainure (52) annulaire destinée à loger une partie d'ancrage (54) réalisée de manière correspondante du moyen de retenue (50) associé, la rainure (52) étant reliée par le biais d'ouvertures (53) réparties en particulier à distances régulières sur la périphérie de la rainure (52), et s'étendant dans le sens axial, au côté avant de l'élément de boîtier (38a), lesquelles sont traversées par les moyens de retenue (50).

12. Soupape selon l'une des revendications précédentes, **caractérisée en ce que** les premiers et/ou les seconds éléments de boîtier (38a, 38b) sont couplés sur leurs côtés arrière éloignés de l'élément étanche (39) par le biais d'éléments d'écartement (55) avec d'autres premiers ou seconds éléments de boîtier (38a, 38b) contigus, le premier élément de boîtier (38a) étant couplé de préférence avec un autre second élément de boîtier contigu et le second élément de boîtier (38b) avec un autre premier élément de boîtier (38a) contigu.

13. Soupape selon la revendication 12, **caractérisée en ce que** les élément d'écartement (50) sont fixés sur le second élément de boîtier (38b), en particulier sont surmoulés dessus.

14. Soupape selon l'une des revendications précédentes, **caractérisée en ce que** les premiers et les seconds éléments de boîtier (38a, 38b) sont fabriqués dans la même matière, en particulier en matière polymère.
